(19) Europäisches Patentamt
European Patent Office
Office européen des brevets

(11) **EP 4 382 890 B1**

(12) **EUROPEAN PATENT SPECIFICATION**

(45) Date of publication and mention
of the grant of the patent:
**26.11.2025 Bulletin 2025/48**

(21) Application number: **22461641.7**

(22) Date of filing: **09.12.2022**

(51) International Patent Classification (IPC):
***G01N 21/65*** *(2006.01)*

(52) Cooperative Patent Classification (CPC):
**G01N 21/658;** G01N 2201/129

(54) **METHOD OF SARS-COV-2 VIRUS DETECTION USING SURFACE ENHANCED RAMAN SPECTROSCOPY (SERS)**

VERFAHREN ZUR SARS-COV-2-VIRUS-DETEKTION UNTER VERWENDUNG VON OBERFLÄCHENVERSTÄRKTER RAMAN-SPEKTROSKOPIE (SERS)

PROCÉDÉ DE DÉTECTION DU VIRUS SARS-COV-2 UTILISANT LA SPECTROSCOPIE RAMAN EXALTÉE DE SURFACE (SERS)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**12.06.2024 Bulletin 2024/24**

(73) Proprietor: **Instytut Chemii Fizycznej PAN**
**01-224 Warszawa (PL)**

(72) Inventors:
• **Berus, Sylwia**
**01-493 Warszawa (PL)**
• **Michota-Kaminska, Agnieszka**
**05-071 Sulejowek (PL)**
• **Nowicka, Ariadna**
**62-100 Wagrowiec (PL)**
• **Kowalska, Aneta**
**05-825 Grodzisk Mazowiecki (PL)**
• **Nicinski, Krzysztof**
**05-119 Lajski (PL)**
• **Szymborski, Tomasz**
**05-152 Czosnow (PL)**

(74) Representative: **JD&P Patent Attorneys**
**Joanna Dargiewicz & Partners**
**ul. Mysliborska 93A/50**
**03-185 Warszawa (PL)**

(56) References cited:
**EP-A1- 3 901 617**

• **SZYMBORSKI TOMASZ ET AL: "Ultrasensitive SERS platform made via femtosecond laser micromachining for biomedical applications", JOURNAL OF MATERIALS RESEARCH AND TECHNOLOGY, vol. 12, 1 May 2021 (2021-05-01), pages 1496 - 1507, XP093041932, ISSN: 2238-7854, DOI: 10.1016/j.jmrt.2021.03.083**

## Description

### Technical Field

The subject of the invention is a method of SARS-COV-2 virus detection using surface-enhanced Raman spectroscopy (SERS) together with statistical analysis as a rapid test for the presence of SARS-COV-2 virus in body fluids, especially saliva. The method according to the present invention enables performing rapid tests to determine the presence of SARS-CoV-2 virus in clinical saliva and nasopharyngeal samples using the surface-enhanced Raman spectroscopy (SERS) technique together with chemometric analysis.

### Background Art

COVID-19 is a disease caused by the SARS-CoV-2 virus, which led to declaration of pandemic state of emergency in 2020. As of February 2022, statistics indicate that there are 427,000,000 positive cases and more than 5,900,000 people who have died as a result of the disease. The high virus transmission is related to the fact that it can very easily be transmitted by the droplet route (saliva, nasopharyngeal secretion), as well as by direct contact through the mucous membranes of the mouth, nose or eye. In addition, the large number of asymptomatic cases intensifies the phenomenon of high transmission of the SARS-CoV-2 virus (Day, 2020; Gao et *al.,* 2021; Zhao et *al.,* 2020).

### Background of the Invention

Two types of tests are used to detect the SARS-CoV-2 pathogen:

(1) Molecular tests for the presence of viral RNA genetic material, and

(2) Serological tests that identify the immune response as a result of viral infection (antibodies to specific viral proteins, e.g.: S protein, nucleocapsid protein) (Afzal, 2020; Espejo et *al.,* 2020).

The real-time reverse transcription-polymerase chain reaction (RT-PCR) (type I) technique is characterized by high sensitivity and specificity, it is considered the so-called gold standard for COVID-19 diagnosis. However, false-negative and false-positive results related to virus mutation or inhibition of the amplification of the reaction, among other things, are also possible. In addition, the RT-PCR technique requires use of expensive chemical reagents, and the analysis time (from several hours to several days) significantly limits the number of tests performed per day (Tahamtan and Ardebili, 2020; van Kasteren et *al.,* 2020). Therefore, there is still a need to provide a method to test for the presence of SARS-CoV-2 virus in clinical samples so testing could be performed quickly, inexpensively and simply while maintaining high sensitivity and specificity.

By March 2022, several patents related to the use of the Raman/SERS technique for SARS-CoV-2 virus detection have been developed, i.e.:

i) Detection of IgG and IgM antibodies by gold labeling on an appropriately prepared platform ("CN111650370B - Method and device for detecting novel coronavirus SARS-CoV-2", 2020);
ii) Capture of SARS-CoV-2 virus on antibodies deposited on SERS substrate in a system appropriately designed for this purpose ("CN111665356A - SERS-based virus detection method and device", 2020);
iii) Detection of the S protein of the SARS-CoV-2 virus by capturing it on an ACE-2 protein-modified chip designed for this purpose. ("CN111443072A - Raman chip for virus detection, preparation method and virus rapid detection method", 2020);
iv) An integrated detection system consisting of a database of virus spectra, a customized improved substrate, algorithm software and a portable spectrometer ("CN112798529A - Novel coronavirus detection method and system based on enhanced Raman spectrum and neural network", 2021).

Former patent applications relate to the creation of special systems for the specific capture of relevant species (e.g., antigens) and their subsequent detection using a Raman spectrometer.
EP 3 901 617 A1 discloses a method of SARS-CoV-2 virus detection in clinical samples, including steps in which a collected liquid sample is applied onto a high enhancement factor SERS platform made by spark ablation and a liquid sample matrix applied onto the SERS platform is evaporated. The SERS platform with the evaporated sample is subjected to surface-enhanced Raman spectroscopy technique in order to obtain SERS spectra and the obtained SERS spectra are subjected to chemometric analysis.
Szymborski Tomasz et *al.* discloses the use of a SERS platform made by laser ablation for the purpose virus detection.

Authors of the present invention have developed a method for SARS-CoV-2 virus detection in clinical samples based on a specific spectral response determined by the patient's health status: infection of the body with SARS-CoV-2 virus (CoV+) or absence of the infection (healthy patient) (CoV-). The spectral response is provided by silicon SERS substrates, in which the active layer is formed by silver with a thickness of 100 nm, applied by physical vapor deposition (PVD). The result of the analysis is obtained due to an extensive spectral database and calibration models based on previously recorded spectra, which automatically perform sample recognition, i.e. sample classification (CoV+ or CoV-).

The technical problem to be solved by the invention is to develop a new method of SARS-CoV-2 virus detection in clinical samples, with greater sensitivity and specificity, and to provide a method of preparing clinical saliva samples in such a way that spectra with a high signal-to-noise (S/N) ratio could be obtained so that all, even the smallest spectral changes, could be visualized. In further operation, this would ensure accurate classification of the analyzed sample and thus reduce the number of false-positive and false-negative results, and thus increase the sensitivity and specificity of the tests.

**Summary of the Invention**

The subject of the present invention is a method for SARS-CoV-2 virus detection in clinical samples, especially in saliva, characterized by the steps defined in appended claim 1.

- The collected liquid sample is applied onto a high enhancement factor SERS platform made by laser ablation;
- The liquid matrix of the sample applied onto the SERS platform is evaporated;
- The SERS platform with the evaporated sample is subjected to surface-enhanced Raman spectroscopy technique obtaining SERS spectra;
- The obtained SERS spectra are subjected to chemometric analysis, with the classification of the sample to the appropriate CoV(+) or CoV(-) group.

The SERS platform is made using method that includes steps, in which:

- The silicon wafer is mechanically cut into pieces with dimensions such as length, width and diameter of 0.5 to 10 mm, preferably into 3 mm x 3 mm or similar squares, cleaned in a stream of inert gas and subjected to a laser ablation process;
- The ablation process is carried out in two layers, with the ablation layers oriented to each other at an angle of 90°, where

  - The fluence of the femtosecond laser beam, with a wavelength of 1030 nm and a repetition rate of 300 kHz, is 2293 $j \cdot m^2$,
  - The scanning speed of the silicon substrate with the femtosecond laser beam is 1.5 m/s,
  - The scan line distance of the femtosecond laser is 30 $\mu$m,
  - A layer of silver is applied using a PVD process with a thickness of 100 nm.

Preferably, the amount of prepared material for SERS testing on platforms, which more preferably have dimensions of 2 mm x 1 mm, is at least 1.5 $\mu$L.

Preferably, the liquid matrix of the sample applied onto the SERS platform is evaporated in no more than 10 minutes.

The collected clinical sample is subjected to SERS analysis immediately after collection from the patient and within no more than 48 hrs after collection of the clinical material.

Preferably, the obtained SERS spectra are subjected to chemometric analysis using either PCA-LDA or SVMC.

In the SERS spectra of the saliva from a healthy patient, CoV(-), the characteristic bands are recorded: 691, 724, 853, 878, 1002, 1047, 1128, 1270, 1325, 1452, 1590, 1690, and 1792 $cm^{-1}$, which are then used for subsequent chemometric analysis.

In the SERS spectra from the saliva of a patient infected with SARS-CoV-2 virus, CoV(+), the characteristic bands are recorded: 654, 724, 1002, 1325, 1452, 1590, 1690 $cm^{-1}$, which are then used for subsequent chemometric analysis.

The ratios of the intensity of the 1002 $cm^{-1}$ band derived from phenylalanine with a constant level to the 654, 720, 1320, 1443 $cm^{-1}$ bands derived from methionine, which are variable in case of infection, are determined.

**Detailed Description of the Invention**

The subject of the invention is the method for determining the presence of SARS-CoV-2 virus in saliva using the SERS technique and chemometric methods. The process includes the following steps:

a) Preparation of platforms according to polish patent application P.434300;
b) Preparation of saliva samples for measurements by surface-enhanced Raman spectroscopy (SERS);
c) Measurement of sample prepared in step (b) spectra by surface-enhanced Raman spectroscopy;
d) Chemometric analysis of the obtained results;
e) Classification of the sample into the appropriate group: CoV(+) or CoV(-).

Preparation of platforms according to patent application P.434300.

The procedure consists of the following steps. In the first step, the silicon wafer is mechanically cut into squares of 3 mm (or similar). In the second step, the squares are cleaned with a stream of inert gas to remove residual silicon fragments, abrasive and dust. In the third step, the cut silicon is transferred to a femtosecond laser table and placed with the polished side in the direction of the incident radiation. In the fourth step, the silicon surface is subjected to the action of incident laser radiation, which in the process of ablation causes a change in the morphology of the surface (i.a., forming nanostructures). The optimal femtosecond laser operating parameters are:

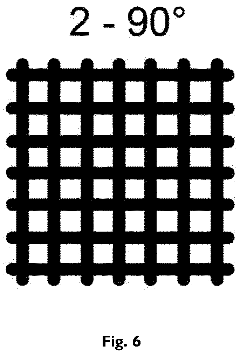

i) Laser radiation length: 1030 nm;
ii) Repetition rate of laser pulses: 300 kHz;
iii) Laser pulse duration: 300 fs;
iv) Fluence: 2293.0 J/m$^2$;
v) Scan line distance: 30.0 $\mu$m;
vi) Scanning speed: 1.5 m/s,
vii) Number of laser passages modifying the entire surface (so-called ablation layers): 2;
viii) Orientation of scan lines: perpendicular (90°) (an example of two ablation layers with perpendicular orientation is shown in Fig. 6).

The ablation process is carried out at room temperature in air. During the surface modification process, no mechanisms are used to clean the silicon surface, e.g. with a stream of inert gas. Silicon substrates subjected to the ablation process are transferred to a Petri dish.

The final step is to coat the sample with a 100-nm-thick layer of silver (SERS-active metal) using the Physical Vapor Deposition (PVD) method. The platform was placed in a working chamber, after which the pressure was reduced to 1 $\times$ 10$^{-2}$ mbar. The current used for silver sputtering was 25 mA. After sputtering the silver layer, the chamber is filled with argon, the samples are removed and placed in a Petri dish, which is placed in an inert gas atmosphere. Thus prepared SERS platforms are ready for use.

The method according to the present invention is characterized in that in step a) SERS platforms with high sensitivity to biochemical changes in the sample, replicability and high enhancement factor (EF) are produced. In step b) the collected 1.5 $\mu$l sample is applied to the SERS substrate, and then after evaporation of the liquid matrix at room temperature (in less than 10 minutes) it is subjected to measurements by SERS technique (step c) and in step d) the obtained SERS spectra are analyzed by chemometric methods, so that in step e) its final identification for the presence of SARS-CoV-2 virus takes place, i.e. its classification into one of the groups - "CoV(+) - presence of infection" or "CoV(-) - absence of infection". Chemometric methods that are able to provide the most accurate identification of a clinical sample include:

i) PCA-LDA (Principal Component Analysis-Linear Discriminant Analysis),
ii) SVMC (Support Vector Machine Classification).

The solution according to the presented invention is characterized by a number of advantages:

i) Saliva collection is a standard medical procedure and is performed in a quick, inexpensive, non-invasive and stress-free manner (which is important, for example, in the case of young children);
ii) It does not require skilled personnel, as the sample preparation process, spectrum recording and chemometric analysis itself are uncomplicated;
iii) The final result of the analysis is obtained within 15 minutes from the time of sampling in an automated and unambiguous manner;
iv) The lack of the use of chemical reagent eliminates errors associated with contamination or human errors during measurement.

According to the invention, the collected clinical sample is subjected to SERS analysis either immediately after collection or within max. 48 hrs after clinical material collection (so that the SERS spectra reflect the actual biochemical state of the sample). Sample measurement after more than 48 hrs causes sample degradation and, consequently, a change in the SERS signal, which may be manifested by the appearance of new bands or their shifts, ultimately leading to errors in the sample classification (false positive or false negative).

The volume of prepared material for tests by SERS method on substrates, preferably 2 mm x 1 mm in size, should not be less than 1.5 $\mu$L. The minimum volume of sample applied onto the SERS substrate (platform) is necessary to cover the surface of the platform in its active area, illuminated by laser light, from which the SERS signal is collected. Too small volume of the material applied onto the SERS platform will reduce the intensity of the recorded signal.

In another preferable embodiment of the invention, the waiting time for the clinical sample to dry on the SERS substrate should not exceed 10 minutes.

### Brief Description of the Figures

Examples of the embodiment of the invention are illustrated in the figures below, where:

**Fig. 1** shows the SERS spectra of saliva taken from a sick patient, i.e., a PCR test-positive patient (CoV+), and from a healthy patient, i.e., a PCR test-negative patient (CoV-);

**Fig. 2** shows the relationship between the intensity ratios of the 654 cm$^{-1}$, 720 cm$^{-1}$, 1330 cm$^{-1}$ and 1445 cm$^{-1}$ bands and 1002 cm$^{-1}$ band for the spectrum from a healthy CoV(-) patient and a sick CoV(+) patient;

**Fig. 3 (a)** shows the defined PLSR model in 2D system and **(b)** in 3D system, representing the relationship between Factor 1 (22%, 40% of total changes), Factor 2 (21%, 5% of total changes) and Factor 3 (9%, 5% of total changes) of SERS spectra of saliva samples collected from 77 CoV+ and 72 CoV- subjects;

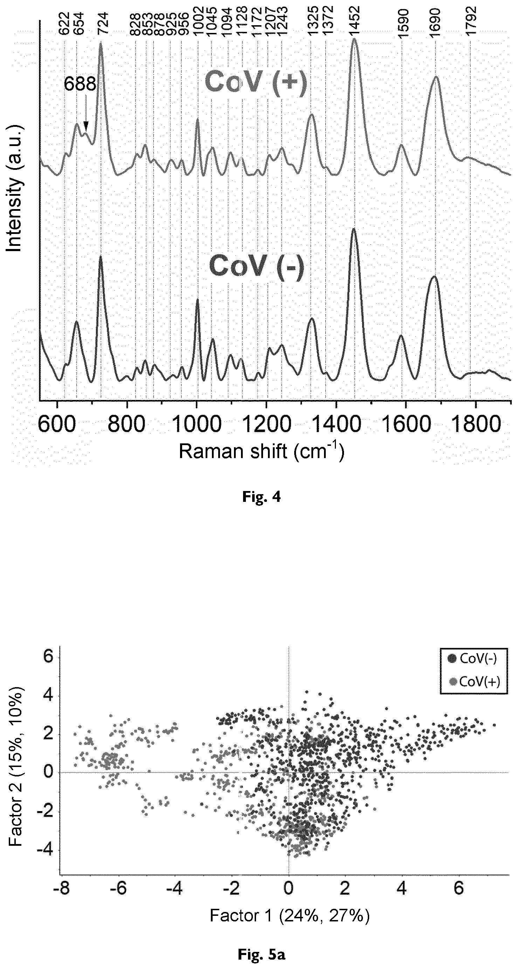

**Fig. 4** shows SERS spectra of nasopharyngeal swabs taken from a PCR test-positive patient (CoV+) and a PCR test-negative healthy patient (CoV-);

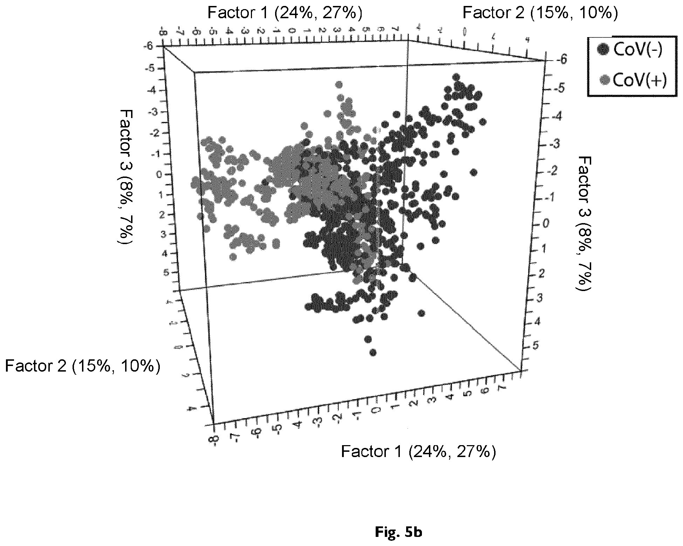

**Fig. 5 (a)** shows the defined PLSR model in 2D system and **(b)** in 3D system showing the relationship between Factor 1 (24%, 27% of total changes), Factor 2 (15%, 10% of total changes) and Factor 3 (8%, 7% of total changes) of SERS spectra of swabs taken from 51 CoV+ and 53 CoV-subjects;

**Fig. 6** shows the orientation of the scan lines (perpendicular, 90°) of the femtosecond laser with two ablation layers having perpendicular orientation as an example.

### EXAMPLES

### Example 1. Sample preparation for measurements by SERS technique

Saliva samples for SERS measurements are collected from patients into sterile tubes at least 30 minutes after eating or drinking. Then 1.5 $\mu$L of saliva is applied onto pre-prepared SERS substrates (preferably, the SERS platforms should be prepared no more than 24 hrs before measurement) measuring 2 mm x 1 mm and allowed to dry completely. Optimal SERS substrates for the analysis of this type of clinical materials are silicon substrates obtained by the laser ablation method described above (according to patent application P.434300), onto which a 100 nm thick layer of metallic silver is applied. These substrates provide high signal repeatability and sensitivity to the analyzed clinical materials.

### Example 2. Measurement and analysis of saliva SERS spectra

This step includes:

### 1) Performing SERS measurement of saliva samples

According to the invention, SERS measurement of saliva samples should be performed as soon as possible after the collection of samples from the patient, but no later than 48 hrs.

In a preferable embodiment of the invention, 15 individual SERS spectra should be taken, with a number of scans equal to 3 and an accumulation time equal to 1 s for an individual spectrum.

In a preferable embodiment of the invention, a portable Raman spectrometer, (Bruker BRAVO) equipped with a Duo LASER™ system operating in the 700-1100 nm range and a CCD camera should be used for the measurements. The power for both lasers is 100 mW, and the spectral resolution is 2-4 cm$^{-1}$.

In a preferable embodiment of the invention, spectral data processing is performed using OPUS software, wherein the order of modification is as follows: spectrum smoothing by the Savitzky-Golay method (points: 5), background cutoff (concave rubberband correction; number of iterations: 6, number of points: 6), and normalization over the entire spectral range 550 - 1900 cm$^{-1}$.

According to the invention, the following bands are characteristic for **CoV(-)** saliva spectra: **691, 724, 853, 878, 1002, 1047, 1128, 1270, 1325, 1452, 1590, 1690,** and **1792 cm$^{-1}$**, which are crucial for subsequent chemometric analysis.

According to the invention, the characteristic bands for **CoV(+)** saliva spectra are: **654, 724, 1002, 1325, 1452, 1590, 1690 cm$^{-1}$**, which are crucial for subsequent chemometric analysis.

The most important bands have been assigned to the corresponding vibrations and are compiled in Table 1.

**Table 1.** Selected bands observed in saliva spectra with their assignments.

| Band [cm$^{-1}$] | Vibration |
|---|---|
| 654 | C-S stretching in methionine |
| 724 | O-O stretching in proteins, glycoproteins (mucin), ring breathing in tryptophan, C-N of choline $(H_3C)_3N^+$ (lipids) |
| 1002 | Phenylalanine aromatic ring breathing |
| 1325 | Amide III (proteins) $CH_3CH_2$ rock in purine bases of nucleic acids |
| 1452 | C-H stretching in glycoproteins (mucin), $CH_3$ deforming in lipids, triglycerides, $CH_2$, $CH_3$ bending in tryptophan |
| 1590 | Phenylalanine, tryptophan, hydroxyproline, hypoxanthine C=C bending in plane in phenylalanine, tyrosine Cytosine $(NH_2)$ |
| 1690 | Amide I (proteins) |

According to the invention, the intensity ratios of the 1002 cm$^{-1}$ band derived from phenylalanine (a constant level) to the 654, 720, 1320, 1443 cm$^{-1}$ bands, which are derived from methionine (variable in case of infection) are established. Thus, the corresponding intensity ratios shown in Table 2 prove an increase in methionine levels in COVID-19 patients. This phenomenon is explained by the increased demand of T cells, as well as the virus, for methionine.

**Table 2.** Tabulated intensity ratio of the 654 cm$^{-1}$, 720 cm$^{-1}$, 1320 cm$^{-1}$, 1445 cm$^{-1}$ bands to the 1002 cm$^{-1}$ control band for saliva samples identified as CoV(+) and CoV(-) by PCR.

| Result | $I_{654}/I_{1002}$ | $I_{720}/I_{1002}$ | $I_{1320}/I_{1002}$ | $I_{1445}/I_{1002}$ |
|---|---|---|---|---|
| **CoV(+)** | 0.98 | 3.38 | 1.48 | 2.23 |
| **CoV(-)** | 0.54 | 2.89 | 1.29 | 1.98 |

In turn, the second part of the step is:

**2) Chemometric analysis of spectral data including:**

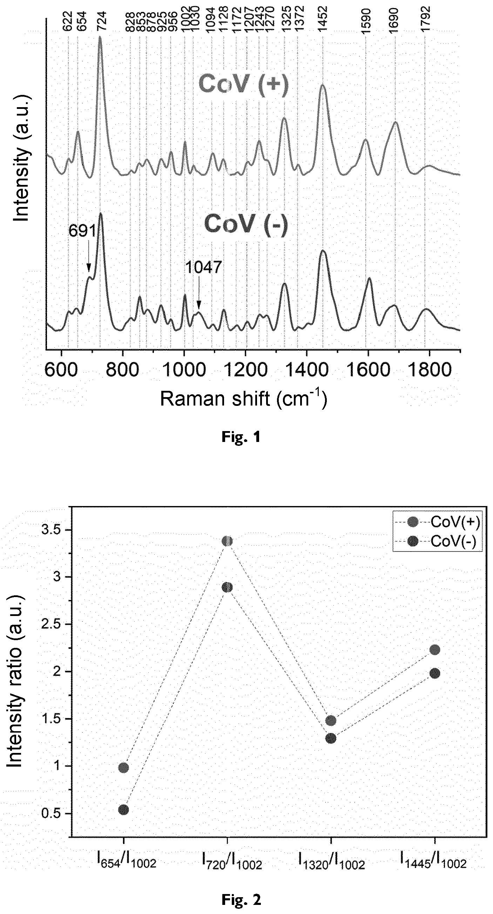

a) Determining the spectral differences between the analyzed data set, which in this case includes the spectra recorded for 77 samples from PCR test-negative subjects designated as CoV(-) and for 72 samples from PCR test-positive subjects designated as CoV(+). Most preferably such analysis is performed using the least squares regression method (PLSR, Partial Least Squares Regression). Figs. 2a and 2b demonstrate such a 2D and 3D graphical representation of the spectral data. It can be seen from the graphs that Factor 1 describes 22% of the total changes within the original spectral data and 40% of the total changes within the variable responses, while for Factor 2 the recognition is at 21% and 5% of the total changes, and for Factor 3 - 9% and 5% of the total changes. This indicates a high separation between the two analyzed classes of CoV(-) and CoV(+). Such data can be used to build a calibration model, which in the next step would enable assigning the unknown sample to the appropriate group.
b) Recognition of a given sample - classification by chemometric methods to the CoV(+) or CoV(-) group.

In a preferred embodiment of the invention, this assignment is made by one of two chemometric methods: SVMC or PCA-LDA.
In a preferred embodiment of the invention, the more preferred chemometric method (characterized by the best sensitivity, specificity and accuracy) is SVMC.
In a preferred embodiment of the invention, a saliva calibration model consisting of 77 samples from PCR test-negative subjects designated as CoV(-) and 72 samples from PCR test-positive subjects designated as CoV(+) was created in tests involving chemometric methods.
In a preferred embodiment of the invention, the calibration model thus developed is used to classify samples taken from patients for diagnosis. In the discussed case, 20 samples were identified among which 10 were CoV(-) and 10 were CoV(+).
In a preferred embodiment of the invention, the decision on whether a sample belongs to the appropriate class: CoV(+) or CoV(-), is made on the basis of the majority of spectra assigned to the given class, that is, according to the formula:

$$X = n + 1$$

where:
$n$ - the number of spectra belonging to a particular class.
Table 3 shows the results of such classification by both the PCA-LDA and SVMC method at the individual spectrum level and the final sample classification. The PCA-LDA method provided correct classification of 10 out of 10 CoV(+) samples and 6 out of 10 CoV(-) samples thus giving an accuracy of 80%, a sensitivity of 100%, and a specificity of 60%. The SVMC method, on the other hand, correctly classified 10 out of 10 CoV(+) samples and 8 out of 10 CoV(-) samples, which gives an accuracy of 90%, a sensitivity of 100% and a specificity of 80%.

**Table 3.** Classification results for 20 saliva samples by PCA-LDA and SVMC methods

| Saliva sample number | PCA-LDA | | | SVMC | | | |
| | Classification result for an individual spectrum ($n_{tot}$=15) | | Final result | Classification result for an individual spectrum ($n_{tot}$=15) | | Final result | Actual result |
| | Covid (+) | Covid (-) | | Covid (+) | Covid (-) | | |
| 1 | 13 | 2 | COVID (+) | 12 | 3 | COVID (+) | COVID (+) |
| 2 | 14 | 1 | COVID (+) | 15 | - | COVID (+) | COVID (+) |
| 3 | 15 | - | COVID (+) | 15 | - | COVID (+) | COVID (+) |
| 4 | 15 | - | COVID (+) | 14 | 1 | COVID (+) | COVID (+) |
| 5 | 15 | - | COVID (+) | 15 | - | COVID (+) | COVID (+) |
| 6 | 15 | - | COVID (+) | 15 | - | COVID (+) | COVID (+) |
| 7 | 15 | - | COVID (+) | 15 | - | COVID (+) | COVID (+) |
| 8 | 15 | - | COVID (+) | 15 | - | COVID (+) | COVID (+) |
| 9 | 15 | - | COVID (+) | 14 | 1 | COVID (+) | COVID (+) |
| 10 | 15 | - | COVID (+) | 15 | - | COVID (+) | COVID (+) |
| 11 | 5 | 10 | COVID (-) | **15** | - | **COVID (+)** | **COVID (-)** |
| 12 | - | 15 | COVID (-) | **15** | - | **COVID (+)** | **COVID (-)** |
| **13** | **15** | - | **COVID (+)** | 5 | 10 | COVID (-) | COVID (-) |
| 14 | - | 15 | COVID (-) | - | 15 | COVID (-) | COVID (-) |
| **15** | **15** | - | **COVID (+)** | - | 15 | COVID (-) | COVID (-) |
| **16** | **15** | - | **COVID (+)** | 5 | 10 | COVID (-) | COVID (-) |
| **17** | **15** | - | **COVID (+)** | - | 15 | COVID (-) | COVID (-) |

(continued)

| Saliva sample number | PCA-LDA | | | SVMC | | | |
| | Classification result for an individual spectrum ($n_{tot}$=15) | | Final result | Classification result for an individual spectrum ($n_{tot}$=15) | | Final result | Actual result |
| | Covid (+) | Covid (-) | | Covid (+) | Covid (-) | | |
| 18 | - | 15 | COVID (-) | 6 | 9 | COVID (-) | COVID (-) |
| 19 | 1 | 14 | COVID (-) | - | 15 | COVID (-) | COVID (-) |
| 20 | - | 15 | COVID (-) | - | 15 | COVID (-) | COVID (-) |

**Table 4.** Comparison of diagnostic parameters (specificity, sensitivity, accuracy) for saliva and nasopharyngeal swabs by PCA-LDA and SVMC methods

| Clinical material | Chemometric method | Sensitivity [%] | Specificity [%] | Accuracy [%] | Parameters calculated against number of samples |
|---|---|---|---|---|---|
| Saliva | PCA-LDA | 100.0 | 60.0 | 80.0 | **20** |
| | SVMC | 100.0 | 80.0 | 90.0 | 20 |
| Nasopharyngeal swab | PCA-LDA | 63.0 | 75.0 | 72.0 | 16 |
| | SVMC | 88.0 | 63.0 | 75.0 | 16 |

**Method of performing a diagnostic test for SARS-CoV-2 virus by SERS coupled to chemometrics for nasopharyngeal swabs**

**Example 3. Sample preparation for measurements by SERS technique**

Nasopharyngeal swab samples for SERS measurements are vortexed for 10 s to obtain a better and more homogeneous suspension of the swab in saline solution. Then, 1.5 µL of saliva is applied onto the pre-prepared SERS substrates (preferably, SERS platforms should be prepared no more than 24 hrs before measurement) measuring 2 mm x 1 mm and allowed to dry completely. Optimal SERS substrates for analysis of this type of clinical materials are silicon substrates obtained by laser ablation (according to patent application P.434300), onto which a layer of metallic silver of 100 nm thickness is applied. These substrates provide high signal repeatability and sensitivity to the analyzed clinical materials.

**Example 4. Measurement and analysis of SERS spectra of nasopharyngeal swabs**

This step includes:

**1) Performing SERS measurement of nasopharyngeal swab samples**

In a preferred embodiment of the invention, SERS measurements of nasopharyngeal swab samples should be made as soon as possible after collecting samples from the patient, but no later than 48 hrs.

In a preferred embodiment of the invention, 15 individual SERS spectra should be taken, with a number of scans equal to 3 and an accumulation time equal to 1 s for an individual spectrum.

In a preferred embodiment of the invention, a portable Raman spectrometer (Bruker BRAVO) equipped with a Duo LASER™ system operating in the 700-1100 nm range and a CCD camera should be used for the measurements. The power for both lasers is 100 mW and the spectral resolution is 2-4 cm$^{-1}$.

In a preferred embodiment of the invention, spectral data processing is performed using OPUS software, wherein the order of modification is as follows: spectrum smoothing by the Savitzky-Golay method (5 points), background cutoff (concave rubberband correction; number of iterations: 6, number of points: 6), normalization over the entire spectral range 550 - 1900 cm$^{-1}$.

In a preferred embodiment of the invention, the following bands are characteristic for nasopharyngeal swab spectra: 724, 1002, 1045, 1330, 1452, 1590, and 1680 cm$^{-1}$, which are crucial for subsequent chemometric analysis.

In a preferred embodiment of the invention, the characteristic bands for CoV(+) saliva spectra are: 688 cm$^{-1}$ and 925 cm$^{-1}$, which can be attributed to neopterin, which is a biomarker of the cellular immune response during viral infection.

In turn, the second part of the step is:

## 2) Chemometric analysis of spectral data including:

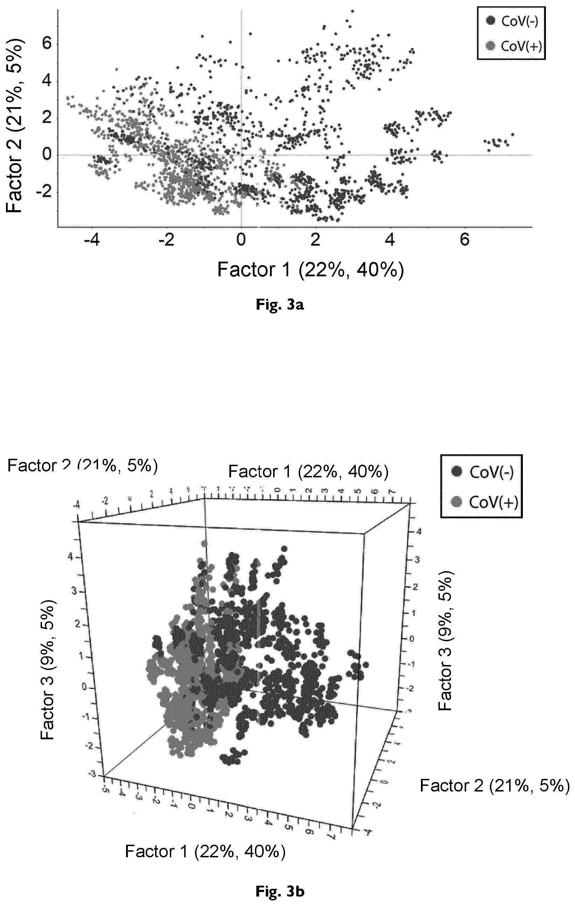

a) Determining the spectral differences between the analyzed data set, which in this case includes the spectra recorded for 51 samples from PCR test-negative subjects designated as CoV(-) and for 52 samples from PCR test-positive subjects designated as CoV(+). Most preferably such analysis is performed using the least squares regression method (PLSR, Partial Least Squares Regression). Figs. 3a and 3b show such a 2D and 3D graphical representation of the spectral data. It can be seen from the graphs that Factor 1 describes 24% of the total changes within the original spectral data and 27% of the total changes within the variable responses, while for Factor2 the recognition is at 15% and 10% of the total changes, and for Factor 3 - 8% and 7% of the total changes. This indicates a high separation between the two analyzed classes of CoV(-) and CoV(+), so such data in the next step will be used to build a calibration model. Nevertheless, the spectral separation of nasopharyngeal swabs is at a lower level than that of saliva spectra. On this basis, it can already be concluded that saliva is a better material for COVID-19 diagnostics, as it provides richer spectral differentiation.

b) Recognition of a given sample - classification by chemometric methods to the CoV(+) or CoV(-) group.

In a preferred embodiment of the invention, this is done by one of two chemometric methods: SVMC or PCA-LDA.

In a preferred embodiment of the invention in tests involving chemometric methods, it is important to create a calibration model that includes as much sample variation as possible. In the discussed case, the nasopharyngeal calibration model consists of 53 samples from PCR test-negative subjects designated as CoV(-) and 51 samples from PCR test-positive subjects designated as CoV(+).

In another preferred embodiment of the invention, the calibration model thus developed is used to classify samples taken from patients for diagnosis. In the discussed case, 16 samples were identified among which 8 were CoV(-) and were 8 CoV(+).

In a preferred embodiment of the invention, the decision on whether a sample belongs to the appropriate class, CoV(+) or CoV(-), is made on the basis of the majority of spectra assigned to the given class, that is, according to the formula:

$$X = n + 1$$

where:

n - the number of spectra belonging to a particular class.

Table 5 shows the results of classification by both the PCA-LDA and SVMC method at the individual spectrum level and the final sample classification. The PCA-LDA method provided correct classification of 5 out of 8 CoV(+) samples and 6 out of 8 CoV(-) samples thus giving an accuracy of 72%, a sensitivity of 63%, and a specificity of 75%. The SVMC method, on the other hand, correctly classified 7 out of 8 CoV(+) samples and 5 out of 8 CoV(-) samples, which gives an accuracy of 75%, a sensitivity of 88%, a specificity of 63%.

**Table 5.** Classification results for 16 nasopharyngeal swab samples by PCA-LDA and SVMC methods

| Nasopharyngeal swab sample number | PCA-LDA | | Final result | SVMC | | Final result | Actual result |
|---|---|---|---|---|---|---|---|
| | Classification result for an individual spectrum ($n_{tot}$=15) | | | Classification result for an individual spectrum ($n_{tot}$=15) | | | |
| | Covid (+) | Covid (-) | | Covid (+) | Covid (-) | | |
| 1 | **2** | **13** | **COVID (-)** | - | **15** | **COVID (-)** | COVID (+) |
| 2 | **6** | **9** | **COVID (-)** | 12 | 3 | COVID (+) | COVID (+) |
| 3 | 13 | 2 | COVID (+) | 15 | - | COVID (+) | COVID (+) |
| 4 | **6** | **9** | **COVID (-)** | 15 | - | COVID (+) | COVID (+) |

(continued)

| Nasopharyngeal swab sample number | PCA-LDA | | | SVMC | | | |
|---|---|---|---|---|---|---|---|
| | Classification result for an individual spectrum ($n_{tot}$=15) | | Final result | Classification result for an individual spectrum ($n_{tot}$=15) | | Final result | Actual result |
| | Covid (+) | Covid (-) | | Covid (+) | Covid (-) | | |
| 5 | 15 | - | COVID (+) | 12 | 3 | COVID (+) | COVID (+) |
| 6 | 15 | - | COVID (+) | 15 | - | COVID (+) | COVID (+) |
| 7 | 15 | - | COVID (+) | 15 | - | COVID (+) | COVID (+) |
| 8 | 15 | - | COVID (+) | 15 | - | COVID (+) | COVID (+) |
| 9 | - | 15 | COVID (-) | - | 15 | COVID (-) | COVID (-) |
| 10 | 6 | 9 | COVID (-) | **11** | **4** | **COVID (+)** | COVID (-) |
| 11 | - | 15 | COVID (-) | - | 15 | COVID (-) | COVID (-) |
| 12 | - | 15 | COVID (-) | - | 15 | COVID (-) | COVID (-) |
| 13 | **15** | - | **COVID (+)** | **14** | **1** | **COVID (+)** | COVID (-) |
| 14 | **15** | - | **COVID (+)** | **15** | - | **COVID (+)** | COVID (-) |
| 15 | - | 15 | COVID (-) | - | 15 | COVID (-) | COVID (-) |
| 16 | - | 15 | COVID (-) | - | 15 | COVID (-) | COVID (-) |

**Literature**

Afzal, A., 2020. Molecular diagnostic technologies for COVID-19: Limitations and challenges. J. Adv. Res. 26, 149-159. https://doi.org/10.1016/j.jare.2020.08.002

CN111443072A - Raman chip for virus detection, preparation method and virus rapid detection method [WWW Document], 2020. URL https://patents.google.com/patent/CN111443072A/en?q=Raman%2C+SARS-CoV-2&oq=Raman%2C+SARS-CoV-2 (accessed 3.8.22).

CN111650370B - Method and device for detecting novel coronavirus SARS-CoV-2 [WWW Document], 2020. URL https://patents.google.com/patent/CN111650370B/en?q=Raman%2C+SARS-CoV-2&oq=Raman%2C+SARS-CoV-2 (accessed 3.8.22).

CN111665356A - SERS-based virus detection method and device [WWW Document], 2020. URL https://patents.google.com/patent/CN111665356A/en?q=SERS%2C+SARS-CoV-2&oq=SERS%2C+SARS-CoV-2 (accessed 3.8.22).

CN112798529A - Novel coronavirus detection method and system based on enhanced Raman spectrum and neural network [WWW Document], 2021. URL https://patents.google.com/patent/CN112798529A/en?q=Raman%2C+SARS-CoV-2&oq=Raman%2C+SARS-CoV-2 (accessed 3.8.22).

Day, M., 2020. Covid-19: four fifths of cases are asymptomatic, China figures indicate. BMJ 369, m1375. https://doi.org/10.1136/bmj.m1375

Espejo, A.P., Akgun, Y., Al Mana, A.F., Tjendra, Y., Millan, N.C., Gomez-Fernandez, C., Cray, C., 2020. Review of current advances in serologic testing for COVID-19. Am. J. Clin. Pathol. 154, 293-304. https://doi.org/10.1093/AJCP/AQAA112

Gao, Z., Xu, Y., Sun, C., Wang, X., Guo, Y., Qiu, S., Ma, K., 2021. A systematic review of asymptomatic infections with COVID-19. J. Microbiol. Immunol. Infect. 54, 12-16. https://doi.org/10.1016/j.jmii.2020.05.001

Tahamtan, A., Ardebili, A., 2020. Real-time RT-PCR in COVID-19 detection: issues affecting the results. Expert Rev. Mol. Diagn. 20, 453-454. https://doi.org/10.1080/14737159.2020.1757437 van Kasteren, P.B., van der Veer, B., van den Brink, S., Wijsman, L., de Jonge, J., van den Brandt, A., Molenkamp, R., Reusken, C.B.E.M., Meijer, A., 2020. Comparison of seven commercial RT-PCR diagnostic kits for COVID-19. J. Clin. Virol. 128, 104412. https://doi.org/10.1016/j.jcv.2020.104412 Zhao, H.J., Lu, X.X., Deng, Y. Bin, Tang, Y.J., Lu, J.C., 2020. COVID-19: Asymptomatic carrier transmission is an underestimated problem. Epidemiol. Infect. 4-6. https://doi.org/10.1017/S0950268820001235.

EP 3 901 617 A1 (NOSTICS B V [NL]) 27 October 2021 - Improved biomolecule detection using surface-enhanced Raman spectroscopy.

Szymborski Tomasz et al., 2021: "Ultrasensitive SERS platform made via femtosecond laser micromachining for biomedical applications", Journal of Materials Research and Technology, vol. 12, 1 May 2021 (2021-05-01), pages 1496-1507, ISSN: 2238-7854, DOI: 10.1016/j.jmrt.2021.03.083.

**Claims**

1. A method of SARS-CoV-2 virus detection in clinical samples, especially in saliva, including steps in which:

   - a collected liquid sample is applied onto a high enhancement factor SERS platform made by laser ablation, wherein the collected clinical sample is subjected to SERS analysis immediately after collection from the patient and within no more than 48 hrs after collection of the clinical material;
   - a liquid sample matrix applied onto the SERS platform is evaporated,
   - the SERS platform with the evaporated sample is subjected to surface-enhanced Raman spectroscopy technique in order to obtain SERS spectra;
   - the obtained SERS spectra are subjected to chemometric analysis obtaining classification of the sample to the appropriate CoV(+) or CoV(-) group, **characterized by** preparing the SERS platform by a method that includes steps in which:

      - a silicon wafer is mechanically cut into pieces with dimensions such as length, width and diameter of 0.5 to 10 mm, preferably into 3 mm x 3 mm or similar squares, cleaned in a stream of inert gas and subjected to a laser ablation process;
      - the ablation process is carried out in two layers, wherein the ablation layers are oriented to each other at a 90° angle, where

         - a fluence of the femtosecond laser beam with a wavelength of 1030 nm and the repetition rate of 300 kHz, is 2293 J•m$^2$;
         - a scanning speed of the silicon substrate by the femtosecond laser beam is 1.5 m/s;
         - a scan line distance of the femtosecond laser is 30 $\mu$m;
         - a layer of silver is applied using a PVD process with a thickness of 100 nm,

   wherein

   in the SERS spectra of the saliva from a healthy patient, CoV(-), characteristic bands are recorded: 691, 724, 853, 878, 1002, 1047, 1128, 1270, 1325, 1452, 1590, 1690, and 1792 cm$^{-1}$, which are then used for subsequent chemometric analysis,
   in the SERS spectra of the saliva from a patient infected with SARS-CoV-2 virus, CoV(+), characteristic bands are recorded: 654, 724, 1002, 1325, 1452, 1590, 1690 cm$^{-1}$, which are then used for subsequent chemometric analysis.
   and the ratios of the intensity of the 1002 cm$^{-1}$ band derived from phenylalanine with a constant level to the 654, 720, 1320, 1443 cm$^{-1}$ bands derived from methionine, which are variable in infection, are determined.

2. The method according to claim 1, **characterized in that** the amount of prepared material for SERS tests on platforms, which preferably have dimensions of 2 mm x 1 mm, is at least 1.5 $\mu$L.

3. The method according to any of the claims 1 or 2, **characterized in that** the liquid sample matrix applied onto the SERS platform is evaporated in no more than 10 minutes.

4. The method according to any of the claims 1-3, **characterized in that** the obtained SERS spectra are subjected to chemometric analysis using either PCA-LDA or SVMC.

**Patentansprüche**

1. Verfahren zum Nachweis des SARS-CoV-2-Virus in klinischen Proben, insbesondere in Speichel, das die folgenden Schritte umfasst:

   - eine gesammelte flüssige Probe wird auf eine SERS-Plattform mit hohem Verstärkungsfaktor aufgebracht, die durch Laserablation hergestellt wird, wobei die gesammelte klinische Probe unmittelbar nach der Entnahme aus dem Patienten und innerhalb von nicht mehr als 48 Stunden nach der Entnahme des klinischen Materials einer SERS-Analyse unterzogen wird;
   - eine flüssige Probenmatrix, die auf die SERS-Plattform aufgebracht wird, wird verdampft,
   - die SERS-Plattform mit der verdampften Probe wird einer oberflächenverstärkten Raman-Spektroskopietechnik unterzogen, um SERS-Spektren zu erhalten;
   - die erhaltenen SERS-Spektren werden einer chemometrischen Analyse unterzogen, die eine Klassifizierung der Probe in die geeignete CoV(+)- oder CoV(-)-Gruppe erhält, **dadurch gekennzeichnet, dass** die SERS-Plattform durch ein Verfahren hergestellt wird, das die folgenden Schritte umfasst:

      - ein Siliziumwafer wird mechanisch in Stücke mit Abmessungen wie Länge, Breite und Durchmesser von 0,5 bis 10 mm, vorzugsweise in 3 mm x 3 mm oder ähnliche Quadrate geschnitten, in einem Strom von Inertgas gereinigt und einem Laserablationsprozess unterzogen;
      - der Ablationsprozess wird in zwei Schichten durchgeführt, wobei die Ablationsschichten in einem 90°-Winkel zueinander ausgerichtet sind, wobei

         - eine Fluenz des Femtosekundenlaserstrahls mit einer Wellenlänge von 1030 nm und der Wiederholungsrate von 300 kHz 2293 J-m2 beträgt;
         - eine Abtastgeschwindigkeit des Siliziumsubstrats durch den Femtosekundenlaserstrahl 1,5 m/s beträgt;
         - ein Abtastlinienabstand des Femtosekundenlasers 30 $\mu$m beträgt;
         - eine Schicht aus Silber unter Verwendung eines PVD-Prozesses mit einer Dicke von 100 nm aufgebracht wird,

   wobei

   in den SERS-Spektren des Speichel von einem gesunden Patienten, CoV(-), charakteristische Banden aufgenommen werden: 691, 724, 853, 878, 1002, 1047, 1128, 1270, 1325, 1452, 1590, 1690 und 1792 cm$^{-1}$, die dann für eine nachfolgende chemometrische Analyse verwendet werden,
   in den SERS-Spektren des Speichel von einem Patienten, der mit dem SARS-CoV-2-Virus, CoV(+), infiziert ist, charakteristische Banden aufgenommen werden: 654, 724, 1002, 1325, 1452, 1590, 1690 cm$^{-1}$, die dann für eine nachfolgende chemometrische Analyse verwendet werden,
   und die Verhältnisse der Intensität der von Phenylalanin mit einem konstanten Niveau abgeleiteten 1002 cm$^{-1}$-Bande zu den von Methionin abgeleiteten 654, 720, 1320, 1443 cm$^{-1}$-Banden, die bei der Infektion variabel sind, bestimmt werden.

2. Verfahren nach Anspruch 1, **dadurch gekennzeichnet, dass** die Menge des hergestellten Materials für SERS-Tests auf Plattformen, die vorzugsweise Abmessungen von 2 mm x 1 mm aufweisen, mindestens 1,5 $\mu$l beträgt.

3. Verfahren nach einem der Ansprüche 1 oder 2, **dadurch gekennzeichnet, dass** die flüssige Probenmatrix, die auf die SERS-Plattform aufgebracht wird, in nicht mehr als 10 Minuten verdampft wird.

4. Verfahren nach einem der Ansprüche 1-3, **dadurch gekennzeichnet, dass** die erhaltenen SERS-Spektren einer chemometrischen Analyse unter Verwendung von entweder PCA-LDA oder SVMC unterzogen werden.

**Revendications**

1. Procédé de détection du virus SARS-CoV-2 dans des échantillons cliniques, en particulier dans la salive, comprenant les étapes suivantes :

   - un échantillon liquide prélevé est appliqué sur une plateforme SERS à facteur d'amplification élevé réalisée par ablation laser, l'échantillon clinique prélevé étant soumis à une analyse SERS immédiatement après son prélèvement sur le patient et dans un délai maximal de 48 heures après le prélèvement du matériel clinique ;
- une matrice d'échantillon liquide appliquée sur la plateforme SERS est évaporée,
- la plateforme SERS avec l'échantillon évaporé est soumise à une technique de spectroscopie Raman améliorée en surface afin d'obtenir des spectres SERS ;
- les spectres SERS obtenus sont soumis à une analyse chimiométrique permettant de classer l'échantillon dans le groupe CoV(+) ou CoV(-) approprié, **caractérisé par** la préparation de la plateforme SERS par un procédé comprenant les étapes suivantes :

- une plaquette de silicium est découpée mécaniquement en morceaux dont les dimensions (longueur, largeur et diamètre) sont comprises entre 0,5 et 10 mm, de préférence en carrés de 3 mm x 3 mm ou similaires, nettoyés dans un flux de gaz inerte et soumis à un processus d'ablation laser ;
- le processus d'ablation est effectué en deux couches, les couches d'ablation étant orientées l'une par rapport à l'autre selon un angle de 90°, où

- une fluence du faisceau laser femtoseconde, d'une longueur d'onde de 1030 nm et d'une fréquence de répétition de 300 kHz, est de 2293 J•m$^2$;
- une vitesse de balayage du substrat en silicium par le faisceau laser femtoseconde est de 1,5 m/s ;
- une distance entre les lignes de balayage du laser femtoseconde est de 30 $\mu$m ;
- une couche d'argent d'une épaisseur de 100 nm est appliquée à l'aide d'un procédé PVD,

dans lequel

dans les spectres SERS de la salive d'un patient sain, CoV(-), des bandes caractéristiques sont enregistrées : 691, 724, 853, 878, 1002, 1047, 1128, 1270, 1325, 1452, 1590, 1690 et 1792 cm$^{-1}$, qui sont ensuite utilisées pour l'analyse chimiométrique ultérieure,
dans les spectres SERS de la salive d'un patient infecté par le virus SARS-CoV-2, CoV(+), des bandes caractéristiques sont enregistrées : 654, 724, 1002, 1325, 1452, 1590, 1690 cm$^{-1}$, qui sont ensuite utilisées pour l'analyse chimiométrique ultérieure.
et les rapports entre l'intensité de la bande à 1002 cm$^{-1}$ dérivée de la phénylalanine, dont le niveau est constant, et les bandes à 654, 720, 1320 et 1443 cm$^{-1}$ dérivées de la méthionine, qui varient en cas d'infection, sont déterminés.

2. Procédé selon la revendication 1, **caractérisé en ce que** la quantité de matériau préparé pour les tests SERS sur des plateformes, qui ont de préférence des dimensions de 2 mm x 1 mm, est d'au moins 1,5 $\mu$L.

3. Procédé selon l'une quelconque des revendications 1 ou 2, **caractérisé en ce que** la matrice d'échantillon liquide appliquée sur la plateforme SERS s'évapore en moins de 10 minutes.

4. Procédé selon l'une quelconque des revendications 1 à 3, **caractérisé en ce que** les spectres SERS obtenus sont soumis à une analyse chimiométrique à l'aide de la PCA-LDA ou de la SVMC.

Fig. 1

Fig. 2

Fig. 3a

Fig. 3b

Fig. 4

Fig. 5a

**Fig. 5b**

**Fig. 6**

## REFERENCES CITED IN THE DESCRIPTION

### Patent documents cited in the description

- CN 111650370 B
- CN 111665356 A
- CN 111443072 A
- CN 112798529 A
- EP 3901617 A1

### Non-patent literature cited in the description

- **AFZAL, A**. Molecular diagnostic technologies for COVID-19: Limitations and challenges.. *J. Adv. Res.*, 2020, vol. 26, 149-159, https://doi.org/10.1016/j.jare.2020.08.002
- **DAY, M**. Covid-19: four fifths of cases are asymptomatic, China figures indicate.. *BMJ 369*, 2020, m1375, https://doi.org/10.1136/bmj.m1375
- **ESPEJO, A.P.** ; **AKGUN, Y** ; **AL MANA, A.F** ; **TJENDRA, Y** ; **MILLAN, N.C** ; **GOMEZ-FERNANDEZ, C.** ; **CRAY, C.** Review of current advances in serologic testing for COVID-19.. *Am. J. Clin. Pathol.*, 2020, vol. 154, 293-304, https://doi.org/10.1093/AJCP/AQAA112
- **GAO, Z** ; **XU, Y** ; **SUN, C.** ; **WANG, X.** ; **GUO, Y** ; **QIU, S** ; **MA, K**. A systematic review of asymptomatic infections with COVID-19.. *J. Microbiol. Immunol. Infect.*, 2021, vol. 54, 12-16, https://doi.org/10.1016/j.jmii.2020.05.001
- **TAHAMTAN, A** ; **ARDEBILI, A**. Real-time RT-PCR in COVID-19 detection: issues affecting the results.. *Expert Rev. Mol. Diagn.*, 2020, vol. 20, 453-454, https://doi.org/10.1080/14737159.2020.1757437
- **VAN KASTEREN, P.B** ; **VAN DER VEER, B** ; **VAN DEN BRINK, S** ; **WIJSMAN, L** ; **DE JONGE, J** ; **VAN DEN BRANDT, A** ; **MOLENKAMP, R** ; **REUSKEN, C.B.E.M** ; **MEIJER, A**. Comparison of seven commercial RT-PCR diagnostic kits for COVID-19. *J. Clin. Virol.*, 2020, vol. 128, 104412, https://doi.org/10.1016/j.jcv.2020.104412
- **ZHAO, H.J** ; **LU, X.X** ; **DENG, Y. BIN** ; **TANG, Y.J** ; **LU, J.C**. COVID-19: Asymptomatic carrier transmission is an underestimated problem.. *Epidemiol. Infect.*, 2020, vol. 4-6, https://doi.org/10.1017/S0950268820001235.
- **SZYMBORSKI TOMASZ et al.** Ultrasensitive SERS platform made via femtosecond laser micromachining for biomedical applications. *Journal of Materials Research and Technology*, 01 May 2021, vol. 12, ISSN 2238-7854, 1496-1507